# EUROPEAN PATENT APPLICATION

(11) **EP 2 639 100 A1**
(43) Date of publication of application: **18.09.2013**
(21) Application number: 11839583.9
(22) Date of filing: 03.08.2011
(51) Int. Cl.: B60M 1/26

(54) **TENSION BALANCER**

(30) Priority: 10.11.2010 JP 2010251507
(71) Applicant: NHK SPRING CO., LTD., Yokohama-shi, Kanagawa 236-0004 (JP)
(72) Inventor: NAKAGOME, Masashi, Isehara-shi Kanagawa 259-1126 (JP)
(74) Representative: HOFFMANN EITLE
(86) International application number: PCT/JP2011/004392
(87) International publication number: WO 2012/063384

(57) **Abstract**

A tension balancer (1) is disposed between an overhead line (2) and a support (3), and maintains the tension of the overhead line (2). The tension balancer (1) is provided with an outer housing (20), an inner movable portion (30), a coil spring, and a pivotable connection portion (60). The outer housing (20) formed in a tube-like shape is pivotably supported at the lower end thereof by the support (3) and is provided so that the outer housing (20) can be turned over. The inner movable portion (30) is provided in such a manner that the inner movable portion (30) is inserted through the outer housing (20), protrudes from the upper end of the outer housing (20), and can extend and retract in the axial direction of the outer housing. The coil spring (40) is housed within the outer housing (20) and presses the inner movable portion (30) in the direction in which the inner movable portion (30) retracts. The pivotable connection portion (60) has a fulcrum (82) which is pivotably supported by the support (3), a movable-portion connecting point (84) to which the upper end of the inner movable portion (30) is connected, and an overhead line connecting portion (86) to which the overhead line for electric railway cars is connected, and the pivotable connection portion (60) is provided so that the pivotable connection portion (60) can pivot about the fulcrum (82).

## Description

### TECHNICAL FIELD

Embodiments of the present invention relate to a tension balancer for maintaining a tension of an aerial line.

### BACKGROUND ART

An electric railway car receives power supply from an overhead line through a power collector such as a pantograph. When a tension of the overhead line changes due to expansion and contraction caused by a change in temperature, a contact state between the overhead line and the power collector is deteriorated to prevent stable power supply. In order to cope with this, a tension balancer for maintaining the tension of the overhead line is disposed between a support and the overhead line.

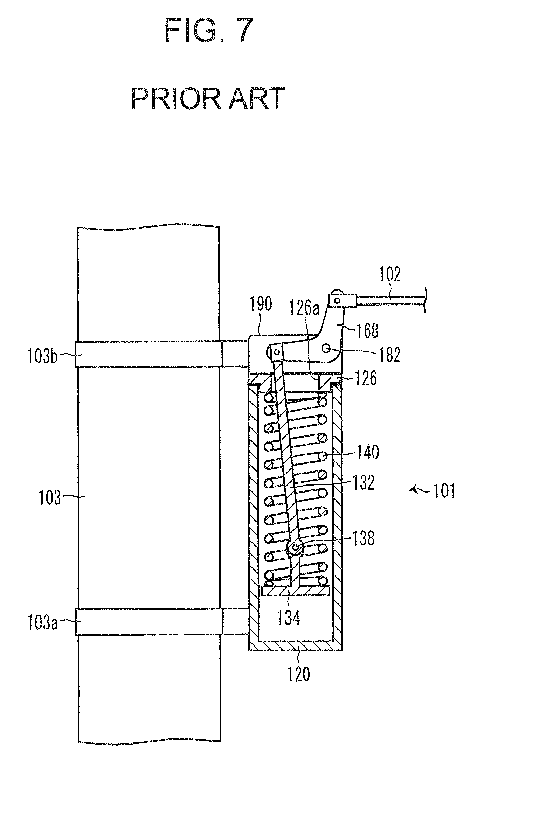

As illustrated in FIG. 7, a conventional tension balancer 101 includes a spring case 120, a link rod 132, a coil spring 140, a pivotable arm 168, and a frame 190 (see, e.g., Patent Document 1).

The spring case 120 extends in a vertical direction in parallel to a support and is fixed to the support 103 by a fixing band 103a. The link rod 132 extends from an inside of the spring case 120 to an outside thereof through a rod insertion hole 126a formed in a lid portion 126. A lower end of the link rod 132 is rotatably connected to a spring receiving portion 134, and an upper end thereof is connected to the pivotable arm 168.

The coil spring 140 is housed in the spring case 120. The coil spring 140 is sandwiched between the lid portion 126 and the spring receiving portion 134 in a compressed manner.

The frame 190 is fixed to an upper end of the spring case 120. The frame 190 is fixed to the support 103 by a fixing band 103b. The pivotable arm 168 is formed of substantially an L-shaped plate. A corner portion of the pivotable arm 168 is pivotably supported with respect to the frame 190. One end of the pivotable arm 168 is connected to the upper end of the link rod 132, and the other end thereof is connected to the overhead line 102.

The tension balancer 101 biases the link rod 132 by elastic force of the coil spring 140 in a direction in which the link rod 132 retracts in the spring case 120 to impart an almost constant tension to the overhead line 102 through the pivotable arm 168 pivotably supported.

### PRIOR ART DOCUMENTS

### PATENT DOCUMENTS

Patent Document 1: Japanese Patent Application Laid-Open Publication No. 2009-166583

### SUMMARY OF THE INVENTION

### PROBLEMS TO BE SOLVED BY THE INVENTION

In the conventional tension balancer 101, when the pivotable arm 168 is pivoted about a fulcrum 182 due to expansion and contraction of the overhead line 102, the link rod 132 moves in an extending/retracting direction with respect to the spring case 120 while being pivoted about a connection point 138 to the spring receiving portion 134. However, since the spring case 120 is fixed to the support 103, an axial direction of the link rod 132 and an axial direction of the spring case 120 do not always coincide with each other, thus preventing the link rod 132 from pulling up the spring receiving portion 134 along the axis of the spring case 120.

Therefore, the spring receiving portion 134 cannot be smoothly be slid in the spring case 120, which may adversely affect function of the tension balancer 101 or may cause noise. Further, force in a different direction from the axial direction is applied to the coil spring 140, which may result in a reduction in durability of the coil spring 140.

The present invention has been made to solve the above problem, and an object thereof is to provide a tension balancer excellent in function and quality.

### MEANS FOR SOLVING THE PROBLEM

According to the present invention there is provided a tension balancer disposed between an aerial line and a support to maintain a tension of the aerial line, the tension balancer comprising: an outer housing formed in a tubular shape and pivotably supported at a lower end thereof by the support so as to be capable of being turned over; an inner movable portion inserted through the outer housing and protrudes from an upper end of the outer housing so as to be capable of extending and retracting in an axial direction of the outer housing; a coil spring housed in the outer housing and biasing the inner movable portion in a direction in which the inner movable portion retracts; and a pivotable connection portion having a fulcrum which is pivotably supported by the support, a movable portion connecting point to which an upper end of the inner movable portion is connected, and an aerial line connection portion to which the aerial line is connected and provided so as to be pivotable about the fulcrum.

According to the present invention there is also provided a tension balancer disposed between an aerial line and a support to maintain a tension of the aerial line, the tension balancer comprising: an outer housing formed into a tubular shape; an inner movable portion inserted through the outer housing and protrudes from a lower end of the outer housing, pivotably supported at a lower end thereof by the support so as to be capable of being turned over, and provided so as to be capable of extending and retracting in an axial direction of the outer housing, a coil spring housed in the outer housing and biasing the inner movable portion in a direction in which the inner movable portion retracts; and a pivotable connection portion having a fulcrum which is pivotably supported by the support, a movable portion connecting point to which an upper end of the inner movable portion is connected, and an aerial line connection portion to which the aerial line is connected and provided so as to be pivotable about the fulcrum.

### ADVANTAGES OF THE INVENTION

According to the present invention there can be provided a tension balancer excellent in function and quality.

### BRIEF DESCRIPTION OF THE DRAWING

FIG. 1 is an elevational view illustrating a mounting state of a tension balancer according to a first embodiment of the present invention.
FIG. 2 is a cross-sectional view taken along a II-II line of FIG. 1 as viewed in the direction of the arrows.
FIG. 3 is a longitudinal cross-sectional view illustrating a balancer body of the tension balancer according to the first embodiment of the present invention.
FIG. 4 is an elevational view illustrating a mounting state of a tension balancer according to a second embodiment of the present invention.
FIG. 5 is an elevational view illustrating a mounting state of a tension balancer according to a third embodiment of the present invention.
FIG. 6 is a longitudinal cross-sectional view illustrating a balancer body of a tension balancer according to a fourth embodiment of the present invention.
FIG. 7 is an elevational view illustrating a mounting state of a conventional tension balancer.

### EMBODIMENTS FOR CARRYING OUT THE INVENTION

### [FIRST EMBODIMENT]

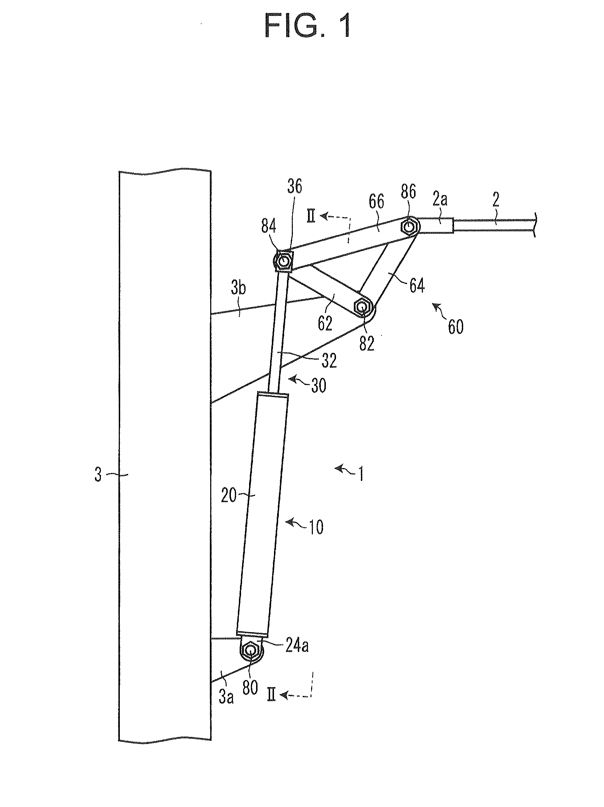

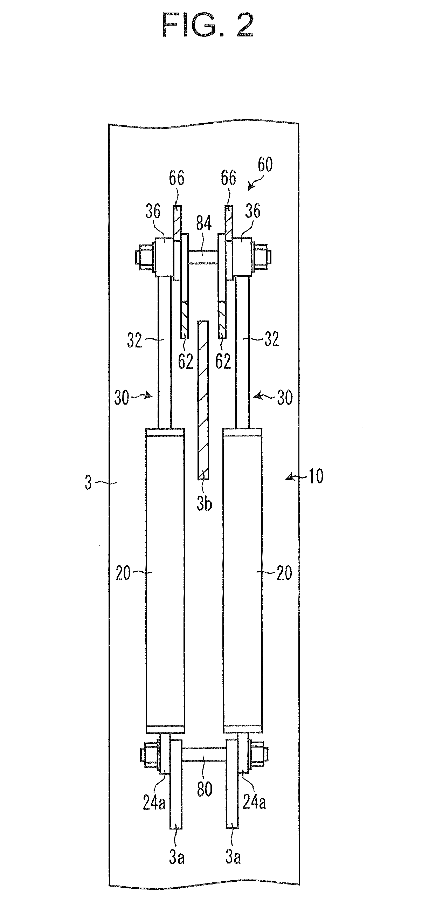

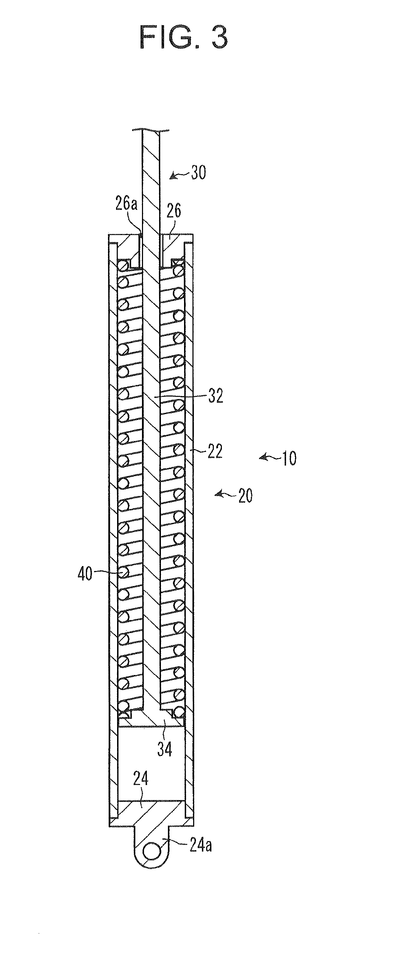

A tension balancer according to a first embodiment of the present invention will be described with reference to FIGS. 1 to 3. FIG. 1 is an elevational view illustrating a mounting state of a tension balancer, and FIG. 2 is a cross-sectional view taken along a II-II line of FIG. 1 as viewed in the direction of the arrows. FIG. 3 is a longitudinal cross-sectional view illustrating a balancer body.

A tension balancer 1 according to the present embodiment is a tension balancer for a overhead line for electric railway cars. The tension balancer 1 is disposed between a support body such as a support 3 and an overhead line 2 for electric railway cars to maintain a tension of the overhead line constant.

A configuration of the tension balancer 1 according to the present embodiment will be described.

As illustrated in FIGS. 1 and 2, the tension balancer 1 includes two balancer bodies 10 disposed in parallel to each other and two pivotable connection portions 60.

As illustrated in FIG. 3, the balancer bodies 10 each include an outer housing 20, an inner movable portion 30, and a coil spring 40.

The outer housing 20 is pivotably supported at its lower end by the support 3 so as to be capable of being turned over. As illustrated in FIG. 3, the outer housing 20 includes a tubular portion 22 formed into a tubular shape, a first lid portion 24, and a second lid portion 26.

The first lid portion 24 closes a lower end of the tubular portion 22. The first lid portion 24 integrally has a mounting plate 24a protruding from a lower surface thereof. The mounting plate 24a has a through hole therein.

The support 3 has two first support plates 3a protruding in a direction in which the overhead line 2 extends. The two first support plates 3a each have a through hole. A stud bolt 80 is inserted through the through holes of the mounting plates 24a of the two outer housings 20 and the through holes of the two first support plates 3a, and the outer housings 20 are each supported so as to be pivotable with respect to the support 3 about the stud bolt 80.

The second lid portion 26 closes an upper end of the tubular portion 22 to serve as a spring seat of the coil spring 40. The second lid portion 26 has a rod insertion hole 26a through which a rod portion 32 (to be described later) of the inner movable portion 30 is inserted.

The inner movable portion 30 is inserted through the outer housing 20 and protrudes from an upper end of the outer housing 20 so as to be capable of extending and retracting in an axial direction of the outer housing 20. The inner movable portion 30 includes a rod portion 32, a spring receiving portion 34, and a mounting portion 36.

The rod portion 32 is formed into a rod shape and extends along an axial center of the outer housing 20. The rod portion 32 extends from an inside of the outer housing 20 and protrudes from the upper end of the outer housing 20 through the rod insertion hole 26a of the second lid portion 26.

The spring receiving portion 34 is fixed to a lower end of the rod portion 32 to serve as a spring seat of the coil spring 40. The mounting portion 36 is provided at an upper end of the rod portion 32.

The coil spring 40 is housed inside the outer housing 20. The coil spring 40 helically extends along the axial direction of the outer housing 20. The coil spring 40 is sandwiched between the second lid portion 26 of the outer housing 20 and the spring receiving portion 34 of the inner movable portion 30 in a compressed manner. That is, the coil spring 40 biases the inner movable portion 30 in a direction in which the inner movable portion 30 retracts in the outer housing 20.

As illustrated in FIG. 1, one pivotable connection portion 60 includes three long plates (a first long plate 62, a second long plate 64, and a third long plate 66). Each of the three long plates 62, 64, and 66 has through holes at both ends thereof. Stud bolts 82, 84, and 86 to be described later are inserted through a second end portion of the first long plate 62 and a first end portion of the second long plate 64, a second end portion of the second long plate 64 and a first end portion of the third long plate 66, and a second end portion of the third long plate 66 and a first end portion of the first long plate 62, respectively, whereby the three long plates 62, 64, and 66 are formed into a triangle.

The support 3 has one second support plate 3b protruding in a direction in which the overhead line 2 extends. The second support plate 3b is formed at a position higher than the position of the first support plates 3a. The second support plate 3b has a through hole. As illustrated in FIG. 2, one stud bolt is inserted through the through holes of the first long plates 62 of the two pivotable connection portions 60, the through holes of the second long plates 64 thereof, and the through hole of the second support plate 3b, whereby the two pivotable connection portions 60 are supported so as to be pivotable with respect to the support 3 about the stud bolt 82.

One stud bolt 84 is inserted through the through holes of the mounting portions 36 of the two inner movable portions 30, the through holes of the first long plates 62 of the two pivotable connection portions 60, and the through holes of the third long plates 66 of the two pivotable connection portions 60, whereby the inner movable portions 30 and the pivotable connection portions 60 are connected to each other.

A connector 2a is fixed to an end portion of the overhead line 2. The connector 2a has a through hole. One stud bolt 86 is inserted through the through hole of the connector 2a of the overhead line 2, the through holes of the second long plates 64 of the two pivotable connection portions 60, and the through holes of the third long plates 66 of the two pivotable connection portions 60, whereby the overhead line 2 and the inner movable portions 30 are connected to each other.

Operation and effect of the tension balancer according to the present embodiment will be described.

In the tension balancer 1, when the overhead line 2 is expanded/contracted, the pivotable connection portion 60 is pivoted about the fulcrum (stud bolt) 82 and, accordingly, the inner movable portion 30 moves along the axis of the outer housing 20 to thereby maintain the tension of the overhead line 2 almost constant.

As described above, in the conventional tension balancer 101, when the pivotable arm 168 is pivoted about the fulcrum 182, the link rod 132 moves in the extending/retracting direction with respect to the spring case 120 while being pivoted about the connection point 138 to the spring receiving portion 134. However, since the spring case 120 is fixed to the support 103, the axial direction of the link rod 132 and the axial direction of the spring case 120 do not always coincide with each other, thus preventing the link rod 132 from pulling up the spring receiving portion 134 along the axis of the spring case 120.

Therefore, the spring receiving portion 134 cannot be smoothly slid in the spring case 120, which may adversely affect function of the tension balancer 101 or may cause noise. Further, force in a different direction from the axial direction is applied to the coil spring 140, which may result in a reduction in the life of the coil spring 140.

On the other hand, in the tension balancer 1 according to the present embodiment, the mounting plate 24a of the outer housing 20 is pivotably supported by the first support plate 3a, whereby the balancer body 10 can be pivoted with respect to the support 3. Therefore, when the pivotable connection portion 60 is pivoted about the fulcrum (stud bolt) 82 due to the expansion or contraction of the overhead line 2 to cause the connection point (stud bolt) 84 between the pivotable connection portion 60 and the inner movable portion 30, the balancer body 10 is pivoted about the stud bolt 80. Thus, the inner movable portion 30 always moves along the axis of the outer housing 20.

Thus, according to the tension balancer 1 of the present embodiment, the spring receiving portion 34 can be slid in the outer housing 20 more smoothly than the spring receiving portion 134 of the conventional tension balancer 101, making it easy for the function of the tension balancer to be exerted and making it difficult for noise due to the sliding movement of the spring receiving portion 34 to occur. Further, according to the present embodiment, force to the coil spring 40 is always applied in the axial direction, thereby enhancing the durability of the coil spring 40.

Further, in the conventional tension balancer 101, the link rod 132 is pivoted about the connection point 138 to the spring receiving portion 134. Therefore, the rod insertion hole 126a formed in the lid portion 126 of the spring case 120 needs to be large enough to allow pivot of the link rod 132. As a result, making it easy for rainwater or the like to enter the spring case 120 through a gap, which easily leads to degradation of the coil spring 140.

On the other hand, in the tension balancer 1 according to the present embodiment, the axial direction of the rod portion 32 and the axial direction of the outer housing 20 always coincide with each other, so that it is sufficient to make a diameter of the rod insertion hole 26a of the second lid portion 26 slightly larger than the diameter of the rod portion 32, thereby minimizing the gap between the rod portion 32 and the rod insertion hole 26a. Thus, according to the tension balancer 1 of the present embodiment, rainwater or the like is difficult to enter the outer housing 20 through the gap as compared to the conventional tension balancer 101 and, accordingly, the coil spring 40 is difficult to deteriorate.

Further, in a configuration in which the outer housing 20 is inclined relative to the support 3, a force (torque) for the outer housing 20 to turn over by its own weight is added to the force pulling the overhead line 2, making it possible to reduce the design value of elastic force of the coil spring 40. Thus, it is possible to reduce a size of the coil spring 40 and reduce material quality thereof, resulting in a reduction of the entire size/cost of the tension balancer 1.

### [SECOND EMBODIMENT]

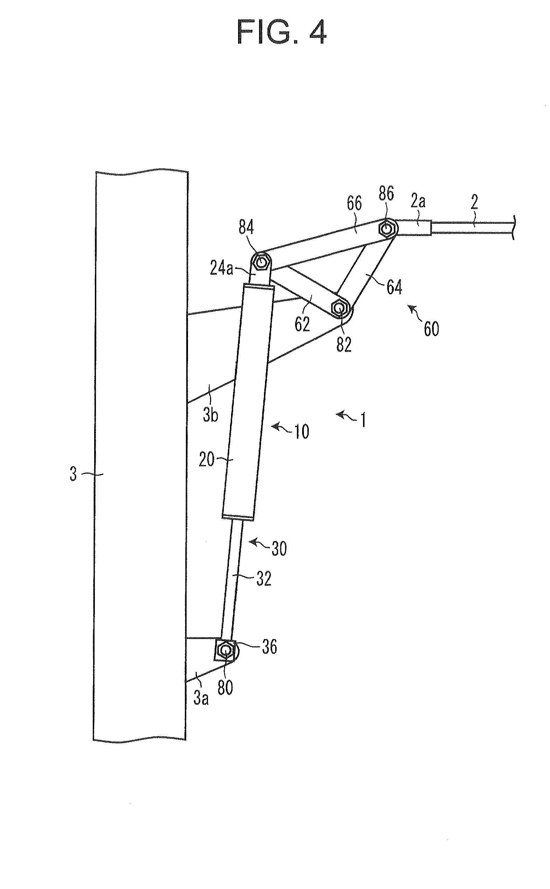

A tension balancer according to a second embodiment of the present invention will be described with reference to FIG. 4. FIG. 4 is an elevational view illustrating a mounting state of a tension balancer according to a second embodiment of the present invention. The present embodiment is a modification of the first embodiment, so that the same reference numerals are used for the same components, and descriptions thereof will be omitted.

In the present embodiment, as illustrated in FIG. 4, the balancer body 10 is turned upside down as compared to that of the first embodiment. More specifically, the mounting plate 24a of the outer housing 20 is connected to the pivotable connection portion 60, and the mounting portion 36 of the inner movable portion 30 is pivotably supported by the first support plate 3a.

According to the present embodiment, the rod insertion hole 26a of the second lid portion 26 is positioned at a lower portion of the outer housing 20, so that rainwater or the like is difficult to enter the outer housing 20 through the gap between the rod portion 32 and rod insertion hole 26a as compared to the tension balancer 1 of the first embodiment and, accordingly, the coil spring 40 is difficult to deteriorate.

Further, a load of the outer housing 20 is added to the force pulling the overhead line 2, so that it is possible to reduce the design value of elastic force of the coil spring 40. This can reduce a size of the coil spring 40 and reduce material quality thereof, resulting in a reduction of the entire size/cost of the tension balancer 1.

### [THIRD EMBODIMENT]

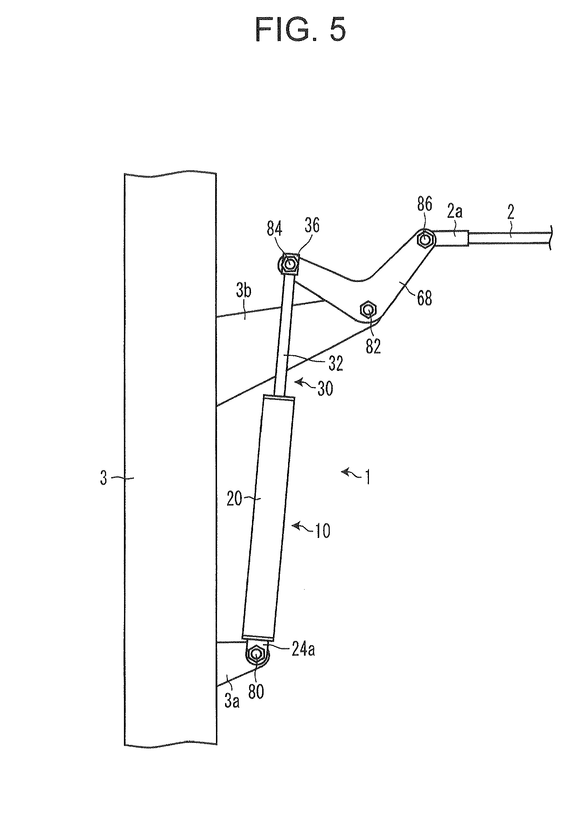

A tension balancer according to a third embodiment of the present invention will be described with reference to FIG. 5. FIG. 5 is an elevational view illustrating a mounting state of a tension balancer according to a third embodiment of the present invention. The present embodiment is a modification of the first embodiment, so that the same reference numerals are used for the same components, and descriptions thereof will be omitted.

In the present embodiment, as illustrated in FIG. 5, two pivotable arms 68 are used as the pivotable connection portions 60. The pivotable arms 68 are each formed into a plate having substantially an L-shape. Each of the pivotable arms 68 has through holes at a corner portion and both end portions thereof.

One stud bolt 82 is inserted through the through holes of the corner portions of the two pivotable arms 68 and the through hole of the second support plate 3b, whereby the two pivotable arms 68 are pivotably supported with respect to the support 3 about the stud bolt 82. One stud bolt 84 is inserted through the through holes of the mounting portions 36 of the two inner movable portions 30 and the through holes of one end portions of the two pivotable arms 68, whereby the inner movable portions 30 and pivotable arms are connected to each other. One stud bolt 86 is inserted through the through hole of the connector 2a of the overhead line 2 and the through holes of the other end portions of the two pivotable arms 68, whereby the overhead line 2 and the pivotable arms 68 are connected to each other.

The present embodiment can provide the same effects as in the first embodiment.

### [FOURTH EMBODIMENT]

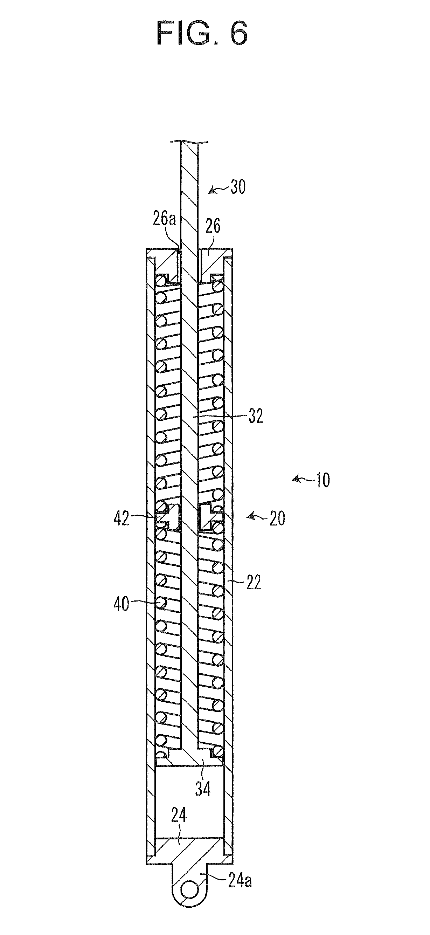

A tension balancer according to a fourth embodiment of the present invention will be described with reference to FIG. 6. FIG. 6 is a longitudinal cross-sectional view illustrating a balancer body of a tension balancer according to a fourth embodiment of the present invention. The present embodiment is a modification of the first embodiment, so that the same reference numerals are used for the same components, and descriptions thereof will be omitted.

In the present embodiment, as illustrated in FIG. 6, two coil springs are disposed in series in the outer housing 20. An intermediate spring receiver 42 is disposed between the two coil springs 40. The two coil springs 40 are wound reversely to each other.

According to the present embodiment, it is possible to impart a higher tension to the overhead line 2 than in the first embodiment.

### [OTHER EMBODIMENTS]

The embodiments described above are merely illustrative, and the present invention is not limited thereto. Further, the features of the embodiments may be combined. For example, the pivotable arm 68 may be adopted in the second embodiment.

Although the two balancer bodies are used in the first embodiment, the number of the balancer bodies may be one or two or more. Further, although the two pivotable connection portions 60 are used in the first embodiment, the number of the pivotable connection portions may be one or two or more.

Although the two coil springs 40 are disposed in series in the outer housing 20 in the fourth embodiment, three or more coil spring may be used. Further, a plurality of the coil springs 40 may be disposed in parallel to each other in the outer housing 20.

Although the above descriptions have been made by taking the overhead line 2 for electric railway cars as an example, the present invention may be applied to other aerial lines, such as power lines.

### EXPLANATION OF SYMBOLS

- 1:: Tension balancer
- 2:: Overhead line
- 2a:: Connector
- 3:: Support
- 3a:: First support plate
- 3b:: Second support plate
- 10:: Balancer body
- 20:: Outer housing
- 22:: Tubular portion
- 24:: First lid portion
- 24a:: Mounting plate
- 26:: Second lid portion
- 26a:: Rod insertion hole
- 30:: Inner movable portion
- 32:: Rod portion
- 34:: Spring receiving portion
- 36:: Mounting portion
- 40:: Coil spring
- 42:: Intermediate spring receiver
- 60:: Pivotable connection portion
- 62:: First long plate
- 64:: Second long plate
- 66:: Third long plate
- 68:: Pivotable arm
- 80, 82, 84, 86:: Stud bolt

## Claims

1. A tension balancer disposed between an aerial line and a support to maintain a tension of the aerial line, the tension balancer comprising:
an outer housing formed in a tubular shape and pivotably supported at a lower end thereof by the support so as to be capable of being turned over;
an inner movable portion inserted through the outer housing and protrudes from an upper end of the outer housing so as to be capable of extending and retracting in an axial direction of the outer housing;
a coil spring housed in the outer housing and biasing the inner movable portion in a direction in which the inner movable portion retracts; and
a pivotable connection portion having a fulcrum which is pivotably supported by the support, a movable portion connecting point to which an upper end of the inner movable portion is connected, and an aerial line connection portion to which the aerial line is connected and provided so as to be pivotable about the fulcrum.

2. The tension balancer according to claim 1, wherein
the outer housing has a tubular portion formed into a tubular shape and a lid portion for closing an upper end of the tubular portion,
the inner movable portion has a rod-like rod portion inserted through a rod insertion hole formed in the lid portion and a spring receiving portion provided at a lower end of the rod portion, and
the coil spring is disposed between the lid portion and the spring receiving portion in a compressed manner.

3. A tension balancer disposed between an aerial line and a support to maintain a tension of the aerial line, the tension balancer comprising:
an outer housing formed into a tubular shape;
an inner movable portion inserted through the outer housing and protrudes from a lower end of the outer housing, pivotably supported at a lower end thereof by the support so as to be capable of being turned over, and provided so as to be capable of extending and retracting in an axial direction of the outer housing,
a coil spring housed in the outer housing and biasing the inner movable portion in a direction in which the inner movable portion retracts; and
a pivotable connection portion having a fulcrum which is pivotably supported by the support, a movable portion connecting point to which an upper end of the inner movable portion is connected, and an aerial line connection portion to which the aerial line is connected and provided so as to be pivotable about the fulcrum.

4. The tension balancer according to claim 3, wherein
the outer housing has a tubular portion formed into a tubular shape and a lid portion for closing a lower end of the tubular portion,
the inner movable portion has a rod-like rod portion inserted through a rod insertion hole formed in the lid portion and a spring receiving portion provided at an upper end of the rod portion, and
the coil spring is disposed between the lid portion and the spring receiving portion in a compressed manner.
